# EUROPEAN PATENT APPLICATION

(11) **EP 1 577 338 A1**
(43) Date of publication of application: **21.09.2005**
(21) Application number: 04018225.5
(22) Date of filing: 02.08.2004
(51) Int. Cl.: C08J 5/18, C08K 5/54, C08L 101/10, B29D 7/01, C08L 23/26

(54) **Method for crosslinking a thermoplastic composition and thermoplastic film thus produced**

(30) Priority: 26.02.2004 IT MI20040344
(71) Applicant: FAIT PLAST S.p.A., 25060 Cellatica (Prov. of Brescia) (IT)
(72) Inventor: Arici, Guido, 25100 Brescia (IT); Paulli, Riccardo, 20021 Bollate (Prov. of Milano) (IT)
(74) Representative: Modiano, Guido

(57) **Abstract**

A method for obtaining on command the crosslinking of thermoplastic resins functionalized with reactive groups that contain silicon, wherein crosslinking is achieved by using a chemical procedure. In particular, organometallic or Lewis acids are used which are applied to the functionalized resins according to particular methods and times that are different from what is currently known. The cross-linked resins of the invention are advantageously processed in film form and have improved chemical and physical characteristics with respect to known similar products. The crosslinked films according to the invention are used interestingly for example in preparing extremely versatile composite multilayer articles.

## Description

The present invention relates to a method for obtaining a crosslinked film that comprises one or more silanized thermoplastic resins and to a film thus crosslinked.

Thermoplastic polymer films currently have a key role in almost all fields of modem industry.

If the crosslinking of these thermoplastic films is required, the solution that is currently most widely used is activation of the filmed polymer by way of physical methods, such as, and most of all, by irradiation with β particles (electrons) of the thermoplastic resin after its extrusion.

Despite its widespread use, this method has severe drawbacks, including very high operating costs due to the purchase and maintenance of β-ray cannons and limited versatility, which in some fields, such as the production of multilayer films, limits its usefulness. Moreover, β irradiation produces an anisotropic crosslinking, with inferior thermal and mechanical properties of the crosslinked film in certain directions.

The aim of the present invention is therefore to provide a method for obtaining a crosslinked thermoplastic film that overcomes the drawbacks of the background art.

Within this aim, an object is to provide a method for obtaining on command a crosslinked thermoplastic film that allows to modulate at will the degree of crosslinking of the film.

Another object is to provide a method as above that produces isotropic and durable crosslinking.

Another object is to provide a single- or multilayer crosslinked film that is better than currently known similar products.

This aim and these and other objects are achieved by a method for obtaining on command the partial or total crosslinking of a film, comprising at least one thermoplastic resin functionalized with chemical groups that comprise silicon, said method comprising the step of chemically promoting the crosslinking of the chemical groups that comprise silicon.

The aim and objects of the invention are also achieved by a film that comprises at least one thermoplastic resin functionalized with chemical groups comprising silicon, said groups being partially or totally crosslinked with the method cited above.

In a first aspect, the invention relates to a method for obtaining on command the partial or total crosslinking of a film that comprises at least one thermoplastic resin functionalized with chemical groups that comprise silicon, said method comprising the step of chemically promoting the crosslinking of the chemical groups that comprise silicon.

The method according to the invention is based on obtaining the crosslinking of a thermoplastic resin by chemical methods instead of physical methods, giving it the ability to crosslink through its functionalization with groups capable of crosslinking.

In particular, silicon-comprising chemical groups have been used which react for example in the presence of humidity, producing the crosslinking of the resin.

Although there is no intention to be tied to particular theories regarding the mechanism of action of these groups, it is believed that the chemical groups comprising silicon lead to crosslinking by way of a condensation reaction of silanol (-SOH) groups so as to form stable Si-O-Si bonds. Optionally, it is possible to use silanol group precursors, restoring the silanol groups at the appropriate time.

The term "film" is preferably understood to designate a lamina obtained for example by extrusion, calendering or spreading and preferably having a thickness comprised between 5 and 500 µm, more preferably between 10 and 200 µm.

The thermoplastic resin is advantageously in solid form and preferably comprises one or more units selected from the group that comprises ethylene, acrylic, vinyl acrylic, urethane, ester, amide units and mixtures and derivatives thereof, wherein said units have a molecular weight comprised between 1x10⁴ and 6x10⁶.

The resin derivatives comprise any chemical compound in which units as defined above or reaction products thereof, and particularly homopolymers and heteropolymers of the units as defined above, are recognizable.

According to a preferred embodiment, the thermoplastic resin is selected from the group that comprises polyolefin resins, preferably PE (polyethylene), acrylic resins, preferably EMA (polyethylene methyl acrylate), EBA (polyethylene butyl acrylate), EEA (polyethylene ethyl acrylate) and mixtures thereof, vinyl resins, preferably EVA (polyethylene vinyl acetate), and mixtures thereof, conveniently functionalized with chemical groups that contain silicon.

A thermoplastic resin as defined above is functionalized with chemical groups that comprise silicon if the units that constitute the resin have been chemically modified by adding chemical groups that comprise silicon.

A functionalized thermoplastic resin as defined above can be optionally combined with any quantity of at least one conventional homopolymer or copolymer of ethylene, acrylic, vinyl acrylic, urethane, ester, amide units, where said homopolymers and copolymers are not silanized. Since the mixing of a silanized resin and of a non-silanized resin is difficult if not impossible to detect with normal laboratory analyses, the observable effect of such a combination appears substantially to be a dilution of the silanized resin, with an apparent reduction of the percentage of silanization of the resin.

The expression "chemical groups comprising silicon" designates any chemical functionality comprising silicon. When it is not stated explicitly that the groups are crosslinked, reference is made preferably to groups capable of reacting chemically so as to form stable intra- and/or intermolecular bonds. Preferred groups in this regard are selected among silanol groups (-SI-OH) and chemical groups that are precursors of silanol groups. The precursor groups of silanol groups are substantially characterized by the ability to restore silanol functionality advantageously following nucleophilic attack performed by water molecules.

When it is said that the chemical groups comprising silicon have reacted partially or completely so as to produce crosslinking (i.e., have crosslinked), it is understood that the chemical groups comprising silicon as defined above have produced bonds that are stable over time and resistant to hydrolysis. Cross linked chemical groups comprising silicon are preferably -Si-O-Si- groups.

The resin can be purchased on the market in already-functionalized form, or its functionalization can be performed by the user by using chemical synthesis methods that are well-known to any person skilled in the art.

The step of chemically promoting crosslinking between the chemical groups that comprise silicon occurs substantially by placing said groups in contact with at least one chemical agent that catalyzes their condensation, wherein said chemical agent is preferably selected from the group that comprises:
-- moisture,
-- liquid water,
-- at least one organometallic compound or at least one Lewis acid;
-- mixtures or combinations thereof;
said agent advantageously comprising a combination of humidity, liquid water and at least one organometallic compound or Lewis acid.

One preferred chemical agent for promoting crosslinking is water, either derived from moisture or liquid water added intentionally and dosed in particular quantities.

According to a preferred embodiment, the step of chemically promoting crosslinking between the chemical groups that comprise silicon is performed by exposing the film to moisture after it has been formed.

According to another embodiment, the step of chemically promoting crosslinking between the chemical groups that comprise silicon is performed by wetting the thermoplastic film with liquid water optionally combined with other ingredients. Typically, it is possible to use a water-alcohol solution, in which the water is present in a percentage comprised between 1 and 5% by weight.

According to another embodiment, the agent for promoting crosslinking comprises water, as moisture and/or liquid water, and at least one catalyst of the crosslinking reaction, so as to improve the quality of the crosslinking and most of all reduce the time required for its practical execution.

Therefore, the possibility to modulate the quality of the crosslinking in terms of degree and speed substantially depends on the type of agent used and on the method of its application to promote crosslinking.

Regardless of whether the water used is in the form of moisture or in liquid form, the catalyst, either pure or formulated in any suitable form known to the person skilled in the art, is applied to the film after its production.

In a highly preferred embodiment, crosslinking is promoted by using liquid water and at least one crosslinking catalyst in the form of a combined preparation for simultaneous, sequential or separate use, wherein said composition is applied by way of known methods. Examples of this combined preparation are a water-alcohol solution of the catalyst, in which the water is present in a percentage comprised between 1 and 5% by weight and the catalyst is present in a percentage comprised between 0.01 and 5% by weight, or a water-based emulsion of the crosslinking catalyst, a detailed example of which is provided hereinafter.

A crosslinking catalyst is any compound that behaves like a Lewis acid, wherein said term, which is common to all chemists, designates a chemical compound that can accept a doublet of electrons in order to form a covalent bond; known examples of Lewis acids are the hydrogen ion (H⁺), boron halides (BX₃, X=F, Cl, Br, I), and halides of aluminum, tin and antimony.

A highly preferred crosslinking catalyst is any organometallic compound, wherein this expression designates a chemical compound defined by:
-- a first metallic cationic portion, in which the metal is preferably tin; and
-- a second anionic portion of the saturated or unsaturated hydrocarbon type, comprising linear, cyclic or ramified portions, considered individually or in combination with each other, optionally comprising one or more atoms selected from the group that comprises oxygen, nitrogen, sulfur, phosphor and halides.

Organometallic compounds have an anionic portion as defined above that comprises 1 to 20 carbon atoms.

As mentioned, a preferred embodiment of the combined preparation comprising liquid water and Lewis acid advantageously occurs as a water-based emulsion (or solution). According to a preferred embodiment of the invention, said emulsion comprises:
a) water;
b) Lewis acid;
c) organic emulsifier.

The expression "organic emulsifier" designates an organic compound that is capable of reducing surface tension between the water and the organometallic compound as such or solubilized in a suitable solvent. Examples of emulsifiers useful for providing the present invention are selected from the group that comprises ionic and non-ionic emulsifiers.

According to a preferred embodiment, the percentage of organometallic catalyst is comprised between 0.01 and 10.00% by weight on the total weight of the mixture, preferably between 0.1 and 5%.

According to a preferred embodiment, the percentage of water is comprised between 99.98 and 80% by weight on the total weight of the mixture.

According to a preferred embodiment, the percentage of organic emulsifier is comprised between 0.01 and 10.00% by weight on the total weight of the mixture, preferably between 0.1 and 5%.

The emulsions according to the present invention may also contain other optional ingredients suitable to improve their chemical-physical properties, such as for example physical stability over time and at different temperatures. If one wishes to add said optional ingredients, the percentages listed above of the three ingredients a), b) and c) may be modified with respect to the values cited above.

According to a preferred embodiment of the invention, the water-based emulsion of the crosslinking promoter is applied by wetting the thermoplastic film, said wetting preferably occurring by immersion, spraying, vaporization or deposition with rollers (print-like process).

In the preferred case in which a combined preparation of liquid water and crosslinking catalyst is used, said preparation is necessarily applied after producing the film.

If crosslinking has occurred by exposing the silanized resin to moisture, according to a particular embodiment it is possible to accelerate crosslinking to completion or to the preferred degree by adding the combined preparation of liquid water and crosslinking catalyst described above.

Control of the humidity in the environment in which the film is stored is an additional way to modulate at will the triggering of crosslinking and the degree of crosslinking of the composition.

The addition of a crosslinking catalyst is a highly preferred refinement, since as described above it surprisingly allows to easily achieve a crosslinking effectiveness hitherto believed possible only by adding catalysts upstream of the processing of the film.

Furthermore, by applying a reaction catalyst unevenly to the surface of the film, regioselective crosslinking has been achieved.

The present invention has surprisingly improved the results available to physical crosslinking methods such as β irradiation.

In particular, mention should be made of the significant reduction of production costs due to the fact that β-ray cannons are no longer required.

Moreover, the method according to the invention allows to achieve three-dimensional crosslinking, in that it has been found that crosslinking between silane groups is promoted with high efficiency and effectiveness in all three spatial directions, so that crosslinked films have improved strength qualities in the most disparate applications.

According to a preferred embodiment, the method according to the invention comprises the additional optional step of subjecting the thermoplastic film being crosslinked to thermal treatments at temperatures that are higher than the ambient temperature. These treatments are intended to optimize the degree and rate of film crosslinking.

Independently of the use of crosslinking catalysts, according to a preferred embodiment, the crosslinking rate can be accelerated further by using oven conditioning.

In this regard, it has been found that at ambient temperature a film treated according to the method of the invention with a water-based preparation of a metalorganic compound reaches the desired degree of crosslinking generally within two weeks of the treatment, whereas in an oven, for example at 60°C, a few hours are sufficient for the same composition.

In another aspect, the present invention relates to a film that comprises at least one thermoplastic resin that is functionalized with chemical groups comprising silicon, said groups being partially or totally crosslinked with the method described above.

According to a preferred embodiment, said film is crosslinked with the aid of at least one organometallic catalyst. In this preferred embodiment,
-- the percentage of silanized resin in the film is comprised between 99.99% and 90% by weight on the total weight; and
-- the percentage of Lewis acid, preferably organometallic compound, is comprised between 0.01% and 10% by weight on the total weight of the mixture.

According to a preferred embodiment of the invention, the film comprises:
i) one or more silanized resins, preferably in a percentage comprised between 99.98% and 70% by weight on the total weight of the mixture;
ii) one or more Lewis acid, preferably organometallic catalysts, preferably in a percentage comprised between 0.01 and 10.00% by weight on the total weight of the mixture; and
iii) one or more process agents and/or color masterbatches, preferably in a percentage comprised between 0.01 and 20.00% by weight on the total weight of the mixture.

As already mentioned earlier, the indicated amount of silanized resin can comprise both pure silanized resin and a mixture in any quantity of silanized resin and one or more optional non-silanized resins, with the result of diluting the silanized resin.

The color masterbatches are compounds that are known in the field and are used to color the film. The process agents are additives that are known in the field and are added to the resin during processing (especially if extrusion is used), in order to facilitate its workability, so as to increase productivity and the quality of the final film.

The film according to the invention can be completely or partially crosslinked, depending on whether silanol groups are still present or not. Since the film is advantageously crosslinked with the method according to the invention described earlier, it is in fact possible to modulate the degree of crosslinking so that crosslinking by condensation of the silanol groups achieves completion only during film storage.

According to a preferred embodiment, the film can be single- or multilayer, with one or more crosslinked or partially crosslinked layers.

In particular, the film described here has considerably improved physical properties with respect to products of a comparable kind that are instead crosslinked for example by physical methods. There are many reasons, including certainly the fact that surprisingly the crosslinking obtained with the method according to the invention is of the three-dimensional type, so that the thermal and mechanical properties of the crosslinked film are improved significantly.

Secondly, in the multilayer film the individual layers may have different degrees and qualities of crosslinking. By virtue of the possibility cited above to modulate crosslinking in a manner that is regioselective in terms of degree, times and rate, it is thus possible to obtain multilayer films in which the various layers have different thermal and mechanical properties according to the crosslinking quality with which they have been produced.

According to a preferred embodiment, the multilayer film comprises both crosslinked and non-crosslinked layers, wherein lack of crosslinking is achieved by combining one or more silanized layers with one or more non-silanized layers and then promoting crosslinking. Since the crosslinking will involve only the silanized layers, a net gain has been obtained in terms of time, since with non-discriminating techniques such as physical crosslinking by irradiation, films of this type must be produced in multiple separate steps, in which crosslinking is followed by the coupling of the non-crosslinked layers with the crosslinked layers.

If one wishes to do so, the multilayer films according to the invention may also have anisotropic mechanical properties, i.e., thermal and mechanical properties that vary according to the directions, wherein the element that allows this modulability is the quality of the crosslinking of the individual layers comprised in the film.

Single- and multilayer films such as the ones described above are impossible to obtain with physical crosslinking technologies and are extremely versatile, being widely used in all sectors requiring thermoplastic polymeric films that have high thermal and mechanical properties.

Other characteristics and advantages of the present invention will become better apparent from the description of the following preferred embodiments, understood exclusively by way of non-limiting example.

Likewise, although the examples that follow and the text explicitly illustrate only some preferred embodiments of the invention, it is immediately evident to the person skilled in the art that many possible modifications may be applied to the invention while maintaining the significant and surprising advantages described in relation to preferred embodiments.

### Example 1

A mixture having the following composition was prepared: 95% silanized polyolefin polymer (average molecular weight Mw approximately 5x10⁵), 3% titanium white masterbatch on LDPE base, 2% process masterbatch on LDPE base.

The mixture was extruded in a monolayer with a thickness of 100 my in normal conditions for extrusion of a polyolefin-based film (170 to 190° C). The resulting film was immersed in a water-based solution before winding the film on a plastic spindle. The water-based solution was obtained by emulsifying the tin-based catalyst (in a percentage of 0.50%) with a non-ionic surfactant (in a percentage of 0.50%).

The resulting film was stored in a drying oven for a period of 48 hours at 50°C in order to accelerate the crosslinking process.

### Example 2

The following samples of film with a polyethylene resin base having a thickness of 100 µm and measuring 20 x 20 cm were prepared in a laboratory:
a) five samples of film crosslinked with the method according to the present invention, with tin-based catalyst in a percentage of 0.5%,
b) five samples of film crosslinked with the method according to the present invention, with a catalyst based on aluminum chloride in a percentage of 1%,
c) five samples of film crosslinked with the method according to the present invention without a catalyst,
d) five samples of film crosslinked with β rays,
e) five samples of non-crosslinked film.

The samples were secured to the upper rim of a beaker (cylindrical container made of glass for laboratory use) by means of an elastic band, so as to obtain a "tensioned" flat surface.

A metal ball weighing 12 grams was placed on the surface of the film thus tensioned.

The beaker with the ball suspended on the tensioned film was then placed in an oven at the temperature of 200° C.

The time required for the ball to fall into the beaker by passing through the film due to melting of the film caused by the temperature of the oven was then measured.

The following is observed:

| Oven at 200 °C | Sample A | Sample B | Sample C | Sample D | Sample E |
|---|---|---|---|---|---|
| Ball drop time | > 45 minutes | 30 minutes | 20 minutes | 12 minutes | 1 minute |

It was so ascertained that the type A sample obtained with the method according to the invention lasted over 3.75 times longer than the type D sample (obtained with the method of β-ray crosslinking) and over 45 times longer than the non-crosslinked type E sample. The superiority of the film and of the crosslinking method according to the present invention over the prior art was thus confirmed.

While the invention has been disclosed with reference to specific embodiments thereof, as illustrated in the description, it is not intended that it is limited thereto, but rather only to the extent set forth hereafter in the appended claims.

The disclosures in Italian Patent Application No. MI2004A000344 from which this application claims priority are incorporated herein by reference.

## Claims

1. A method for obtaining on command the partial or total crosslinking of a film comprising at least one thermoplastic resin functionalized with chemical groups that comprise silicon, said method comprising the step of chemically promoting the crosslinking of the chemical groups that comprise silicon.

2. The method according to claim 1, wherein the chemical groups comprising silicon are selected among silanol -Si-OH groups and chemical groups that are precursors of silanol groups.

3. The method according to claim 1, wherein the step of chemically promoting crosslinking between the chemical groups that comprise silicon consists in placing said groups in contact with at least one chemical agent that catalyzes their condensation.

4. The method according to claim 3, wherein the step of chemically promoting crosslinking between the chemical groups that comprise silicon is carried out after forming the film.

5. The method according to claim 3, wherein said chemical agent is selected from the group that consists of:
-- moisture,
-- liquid water,
-- at least one Lewis acid,
-- mixtures or combinations thereof.

6. The method according to claim 5, wherein said chemical agent consists of a combination of moisture, liquid water and at least one Lewis acid.

7. The method according to claim 5, wherein the liquid water is in the form of a water-alcohol solution, in which water is present in a percentage comprised between 1 and 5% by weight.

8. The method according to claim 5, wherein liquid water and at least one Lewis acid are combined in a combined preparation for sequential or separate use.

9. The method according to claim 8, wherein said preparation is a water-alcohol solution in which the water is present in a percentage comprised between 1 and 5% and the Lewis acid is present in a percentage comprised between 0.01% and 5% by weight.

10. The method according to claim 8, wherein said preparation is an emulsion that consists of:
a) water,
b) Lewis acid,
c) organic emulsifier.

11. The method according to claim 10, wherein the Lewis acid is an organometallic catalyst which is present in a percentage comprised between 0.01% and 10.00% by weight on the total weight of the mixture, and preferably between 0.1 and 5%.

12. The method according to claim 10, wherein the water is in a percentage comprised between 99.98% and 80% by weight on the total weight of the mixture.

13. The method according to claim 10, wherein the organic emulsifier is in a percentage comprised between 0.01 and 10.00% by weight on the total weight of the mixture, preferably between 0.1 and 5%.

14. The method according to any one of claims 5 to 13, wherein said agent comprises at least liquid water and is applied by wetting the film.

15. The method according to claim 14, wherein said wetting is carried out by immersion, spraying, vaporization or deposition with rollers (print-type process).

16. The method according to claim 1, further comprising the step of subjecting the thermoplastic film, during crosslinking, to thermal treatments at temperatures that are higher than the ambient temperature.

17. The method according to claim 1, wherein said step of chemically promoting crosslinking between chemical groups that comprise silicon is carried out isotropically in the resin.

18. The method according to claim 1, wherein said step of chemically promoting crosslinking between chemical groups that comprise silicon is carried out in a regioselective manner inside the resin.

19. A film comprising at least one thermoplastic resin functionalized with chemical groups that comprise silicon, said groups being partially or totally crosslinked with the method according to claim 1.

20. The film according to claim 19, wherein chemical groups comprising silicon that are partially or totally crosslinked are -Si-O-Si-groups.

21. The film according to claim 19, comprising:
-- silanized resin in a percentage comprised between 99.99% and 90% by weight on the total weight;
-- Lewis acid in a percentage comprised between 0.01% and 10% by weight on the total weight.

22. The film according to claim 19, comprising:
i) one or more silanized resins in a percentage comprised between 99.98% and 70% by weight on the total weight of the mixture;
ii) one or more Lewis acids, in a percentage comprised between 0.01 % and 10.00% by weight on the total weight of the mixture; and
iii) one or more process agents and/or color masterbatches in a percentage comprised between 0.01% and 20.00% by weight on the total weight of the mixture.

23. The film according to claim 19, in the form of a single- or multilayer film.

24. The film according to claim 23, wherein the individual layers may have different degrees and qualities of crosslinking.

25. The invention according to claims 1 and 19, wherein the film is a lamina having a thickness comprised between 5 and 500 µm.

26. The invention according to claim 25, wherein the film is a lamina having a thickness comprised between 10 and 150 µm.

27. The invention according to claims 1 and 19, wherein the functionalized thermoplastic resin comprises one or more units selected from the group that consists of ethylene, acrylic, vinyl acrylic, urethane, ester, amide units and derivatives and mixtures thereof, functionalized with chemical groups containing silicon.

28. The invention according to claim 27, wherein the units have a molecular weight comprised between 1x10⁴ and 6x10⁶.

29. The invention according to claim 27, wherein the thermoplastic resin is selected from the group that consists of polyolefin resins, preferably PE, acrylic resins, preferably EMA, EBA, EEA and mixtures thereof, vinyl resins, preferably EVA, and mixtures thereof, functionalized with chemical groups containing silicon.

30. The invention according to claims 1 and 19, wherein the functionalized thermoplastic resin is combined with any quantity of at least one conventional homo- or copolymer of ethylene, acrylic, vinyl acrylic, urethane, ester, amide units, wherein said homo- and copolymers are non-silanized.
